# EUROPÄISCHE PATENTANMELDUNG

(11) **EP 1 298 550 A1**
(43) Veröffentlichungstag der Anmeldung: **02.04.2003**
(21) Anmeldenummer: 01123173.5
(22) Anmeldetag: 27.09.2001
(51) Int. Cl.: G06F 17/60

(54) **Reiseplan- und -ablaufspezifische Bedienschnittstellenmechanismen zum Abruf von Informationen und Diensten während der Reise**

(71) Anmelder: Siemens Mobile Travel Solutions GmbH, 85356 München (DE)
(72) Erfinder: Baumgarten, Hans-Georg, 81667 München (DE); Fricke, Hans-Christian, 31224 Peine (DE); Heimannsfeld, Klaus, 81671 München (DE); Schwab, Christof, 84085 Landquaid (DE)
(74) Vertreter: Berg, Peter, Dipl.-Ing.

(57) **Zusammenfassung**

Die Erfindung erlaubt eine effiziente, benutzerfreundliche Information eines Reisenden während einer Reise durch ein Verfahren zur Versorgung eines Endgerätes (2) eines Reisenden (1) mit Informationen (14, 15) und Diensten (16, 17) zu einer gebuchte Reise (3, 9) des Reisenden (1), indem aus einem mehrere zeitlich aufeinanderfolgende Reiseabschnitte (3, 9) des Sollverlaufes der Reise umfassenden Modell (13) der Reise während der Reise der aktuell vom Reisenden (1) durchlaufene Reiseabschnitt (3) selektiert (11) wird,
wobei während des aktuell selektierten Reiseabschnitts (3) relevante Informationen (14, 15, 16) und Dienste aus die Reise betreffenden Informationen und Diensten (14, 15, 16, 17) herausgefiltert (11) werden, und wobei seitens des Endgerätes (2) des Reisenden (1) die herausgefilterten (11) Informationen und Dienste (14, 15, 16) zur Auswahl (2, 20) angeboten (2) werden.

## Beschreibung

Reiseplan- und -ablaufspezifische Bedienschnittstellenmechanismen zum Abruf von Informationen und Diensten während der Reise

Die Erfindung betrifft Vorrichtungen und Verfahren zur Versorgung eines Endgerätes eines Reisenden mit Informationen betreffend eine gebuchte Reise des Reisenden.

Aufgabe der vorliegenden Erfindung ist es, möglichst effizient und benutzerfreundlich einem Reisenden während einer für ihn gebuchten Reise Informationen und Dienste zur Verfügung zu stellen. Die Aufgabe wird jeweils durch die Gegenstände der unabhängigen Ansprüche gelöst.

Das Herausfiltern und Übertragen einer Auswahl von Informationen und Diensten, die für den aktuell vom Reisenden durchlaufenen Reiseabschnitt der gebuchten Reise relevant sein können (weil sie z.B. künftige Reiseabschnitte betreffen) ermöglicht dem Reisenden eine gezielte und damit benutzerfreundliche, effiziente Informations- und Dienst- Auswahl in Abhängigkeit vom aktuellen Reiseverlauf, ohne dass er mit für ihn gerade nicht relevanten Informationen und Dienste- Angeboten überhäuft wird.

Weitere Merkmale und Vorteile der Erfindung ergeben sich aus den Unteransprüchen und der nachfolgenden Beschreibung eines Ausführungsbeispieles anhand der Zeichnung. Dabei zeigt:
Fig. 1 schematisch einen Reisenden, der sich von einem ersten Transportmittel zu einem zweiten Transportmittel fortbewegt,
Fig. 2 als Blockdiagramm eine erfindungsgemäße Filterung vorhandener Informationen betreffend Reiseabschnitte einer gebuchten Reise aufgrund des Reisefortschrittes und eine Auswahl hieraus,
Fig. 3 einen Personal Tripstage Supervision & Execution Support Engine (=PTAIRE= Vorrichtung zur Überwachung einer Reise und zur Ausführung von Diensten), eingebettet in ein Lösungsumfeld,
Fig. 4 die Abfolge der Verfahrensschritte,
Fig. 5 Abhängigkeiten der Datenmodelle,
Fig. 6 ein Datenmodell eines Reisendenmodells,
Fig. 7 ein Datenmodell eines Reisendenmodells,
Fig. 8a ein Datenmodell eines Reisemodells,
Fig. 8b ein Datenmodell einer Reisephase als Teil des Reisemodells,
Fig. 9 ein Datenmodell eines Reiseausführungsmodells,
Fig. 10 ein Datenmodell einer erweiterten Reisestatustabelle.

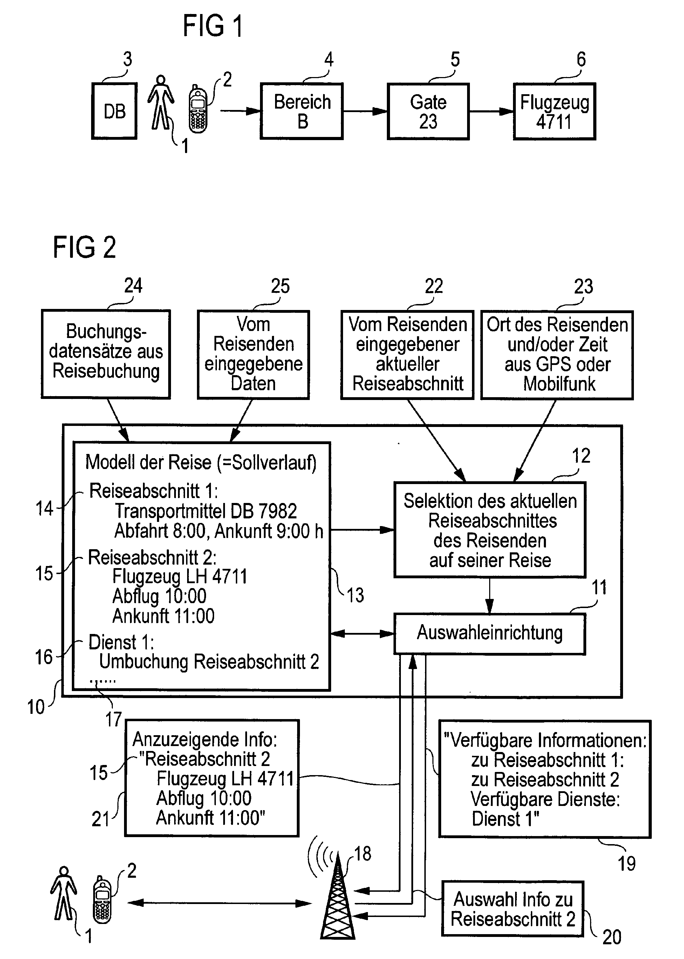

Figur 1 zeigt einen reisenden Telekommunikationsteilnehmer 1 mit einem Telekommunikationsendgerät 2, welcher nach einem ersten Reiseabschnitt seiner Reise mit einem Zug 3 am Flughafen ankommen wird, und über einen Ablugbereich 4 eines Flughafens und ein Gate mit dem Bezugszeichen 5 in das Flugzeug mit dem Bezugszeichen 6 einsteigen wird.

Damit dem Telekommunikationsteilnehmer in Abhängigkeit von seiner aktuellen Reisesituation (er befindet sich noch im Zug 3) nur für ihn relevante Dienste und Informationen angeboten werden, werden in einem Server 10 eines Informationsserviceproviders mit einer Auswahleinrichtung 11 aufgrund einer Selektion 12 des aktuellen Reiseabschnittes (Bahn, 3) des Reisenden und eines Modells 13 (umfassend auch Reiseabschnitts- abhängig relevante Informationen und Dienste) der Reise des Reisenden 1 für den Reisenden 1 aufgrund seines aktuellen Reiseabschnittes und seiner gebuchten Reise relevante Informationen und Dienste aus vorhandenen, die Reise 3, 9 betreffenden Informationen 14, 15 und Diensten 16, 17 herausgefiltert (11). Die von einer Auswahleinrichtung 11 herausgefilterten Informationen 14, 15 und Dienste 16, werden dem Reisenden über ein (durch eine Mobilfunkbasisstation angedeutetes) Mobilfunknetz 18 als Auswahlangebot 19 auf das Telekommunikationsendgerät (Mobilfunkgerät 2) übertragen. Das Telekommunikationsendgerät 2 bietet dem Reisenden (optisch oder akustisch) für ihn aktuell aufgrund des Reisefortschrittes relevante Informationen und Dienste 14, 15, 16 an (z.B. als Auswahlmenü), worauf das Telekommunikationsendgerät 2 auf eine Auswahl des Reisenden (z.B. Auswahl der Anforderung der Informationen zum Reiseabschnitt 2) diese Auswahl 20 über das Mobilfunknetz 18 und ggf. weitere Telekommunikationsnetze an die Auswahleinrichtung 11 des Servers 10 zurück überträgt. Darauf sucht der Server 10 die ausgewählten (20) Informationen (15) oder Dienste aus einer Vielzahl (serverseitig) zur Verfügung stehender Informationen und Dienste 14, 15, 16, 17 heraus und stellt sie (hier als anzuzeigende Information 21) dem Telekommunikationsendgerät 2 des Reisenden über ein Telekommunikationsnetz 18 zur Anzeige (oder Ausführung von Diensten) zur Verfügung.
Im vorliegenden Beispiel werden die vom Reisenden ausgewählten Informationen 15/21 auf dem Endgerät 2 dargestellt. Dem Reisenden übermittelte Informationen umfassen zum Beispiel Angaben zum aktuellen Reiseabschnitt oder Transportmittel und/oder zu künftigen Reiseabschnitten oder Transportmitteln der Reise, insbesondere zu Abfahrts- oder Ankunftszeiten oder Verspätungen oder Umsteige- Hinweisen.

Die Selektion 12 des aktuellen Reiseabschnittes des Reisenden (hier: er fährt noch Zug 3) kann z.B. aufgrund einer Eingabe 22 des Reisenden 1 an seinem Telekommunikationsendgerät 2 (z.B. aus einem Auswahlmenü) erfolgen oder z.B. durch eine an sich bekannte Mobilfunknetz- seitige (18) Feststellung 23 des Aufenthaltsortes des Mobilfunkendgerätes 2 und Abgleich des Ortes und der aktuellen Zeit mit dem (Orte und Zeiten umfassenden) Sollverlauf der Reise.

Eine Information oder ein Dienst (z.B. 17) kann z.B. deshalb für den aktuell vom Reisenden durchlaufenen Reiseabschnitt gerade nicht relevant sein, weil er einen bereits zurückgelegten Reiseabschnitt betrifft oder weil er aufgrund der aktuellen Reisesituation nicht sinnvoll ist.

Das Modell der Reise (Sollverlauf) 13 kann z.B. aus Buchungsdatensätzen 24 zur gebuchten Reise des Reisenden automatisiert abgeleitet werden. Ergänzend können noch vom Reisenden eingegebene weitere Daten zur Reise berücksichtigt werden (z.B. upgrades im Flugzeug während der Reise).

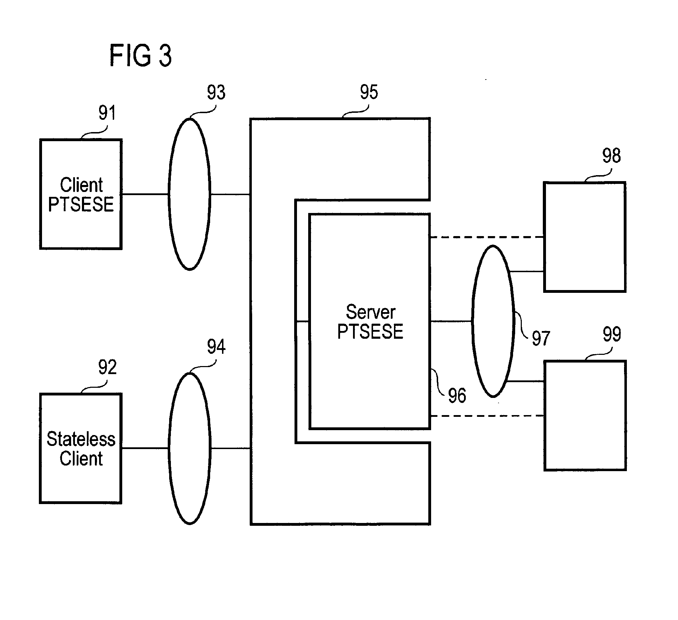

Weitere mögliche Merkmale der Erfindung ergeben sich aus der nachfolgenden detaillierten Beschreibung eines Ausführungsbeispieles anhand der Figuren 3-10:
Reisende planen und buchen typischerweise Tage vor einer Reise die notwendigen Reisemittel, wie etwa Flüge, Fahrzeuge und Übernachtungen. Wie bei allen Planungen treten auch beim Reisen unvorhergesehene Ereignisse ein, welche die geplante Nutzung von Reisemitteln verhindern oder besondere Anstrengungen (Nutzung spezieller Zubringerdienste, Kommunikation mit Leistungserbringern, Buchungen, Stornierungen) durch den Reisenden notwendig machen.
Geschäftsreisende legen meist großen Wert auf eine flexible Reisegestaltung. Das setzt voraus, dass sie Reiseumplannungen und -Umbuchungen, Stornierungen und spontane Buchungen vornehmen können, wenn Termine oder externe Gründe (Stau,...) dies notwendig machen.
Die aus Sicht des Reisenden zusammengefasste Bereitstellung von Reise-Informationen und Reisediensten im Rahmen einer Diensteplattform ist heute nicht verfügbar. Insbesondere unter Berücksichtigung der aktuellen Situation des Reisenden während einer persönlichen Reise ist eine solche vielfältige aber integrierte Diensteumgebung heute nicht verfügbar.

Im Rahmen einer solchen Diensteumgebung kommt dem reiseabschnitts- und fortschrittsspezifischen Abruf von Informationen und Teildiensten eine besondere Bedeutung zu. Der Reisende zeichnet sich dadurch aus, dass Zeit eine knappe Ressource ist und nur gezielte, benutzerfreundliche Interaktionen akzeptiert werden. Die mobile Nutzung leistungsfähiger Reisedienste, welche eine Vielzahl von Informationen und Teildiensten bereitstellen, wirft die Frage nach einer leistungsfähigen aber benutzerfreundlichen Bedienschnittstelle auf.

Das Ausführungsbeispiel beschreibt Reiseplan- und -ablaufspezifische Bedienschnittstellenmechanismen zum Abruf von Informationen und Diensten, welche die Aufmerksamkeit des Reisenden bei der Bedienung vielfältiger Reisedienste sehr gut nutzt und focusiert.
Die geplante Reise ist zu diesem Zweck in Sequenzen von Reiseabschnitten gegliedert. Diese Sequenzen sind durch zeitliche und örtliche Eigenschaften eindeutig zu ordnen. Das Ausführungsbeispiel beschreibt die technische Nutzung dieses Ordnungskriteriums zur Unterstützung der Benutzerführung bei der Bedienung von Reisediensten, insbesondere der mobilen Nutzung von Reisediensten unter Verwendung von Kommunikationsendgeräten.

Ziele der Reiseplan- und -ablaufspezifischen Bedienschnittstellenmechanismen zum Abruf von Informationen und Diensten während der Reise:
- Durch die reiseabschnittsspezifische Bereitstellung von Informationen kann der Reisende benutzerfreundlich eine Vorschau der z. Bsp. im zukünftigen Reiseablauf notwendigen Reisemittel bekommen. Die reiseabschnittsspezifische Bereitstellung von Informationen ermöglicht eine benutzerfreundliche Navigation und Aufbereitung von Nutzungshinweisen in Bezug zu den noch zu durchlaufenden Reiseabschnitten.
- Durch die reisefortschrittsspezifische Bereitstellung dynamisch aktualisierter Informationen mittels Push- und Pull-Service wird der Reisenden sehr fokussiert über zeitlich- und örtlich naheliegende Informationen und Reisedienste informiert.

Merkmale der Reiseplan- und -ablaufspezifische Bedienschnittstellenmechanismen zum Abruf von Informationen und Diensten während der Reise:

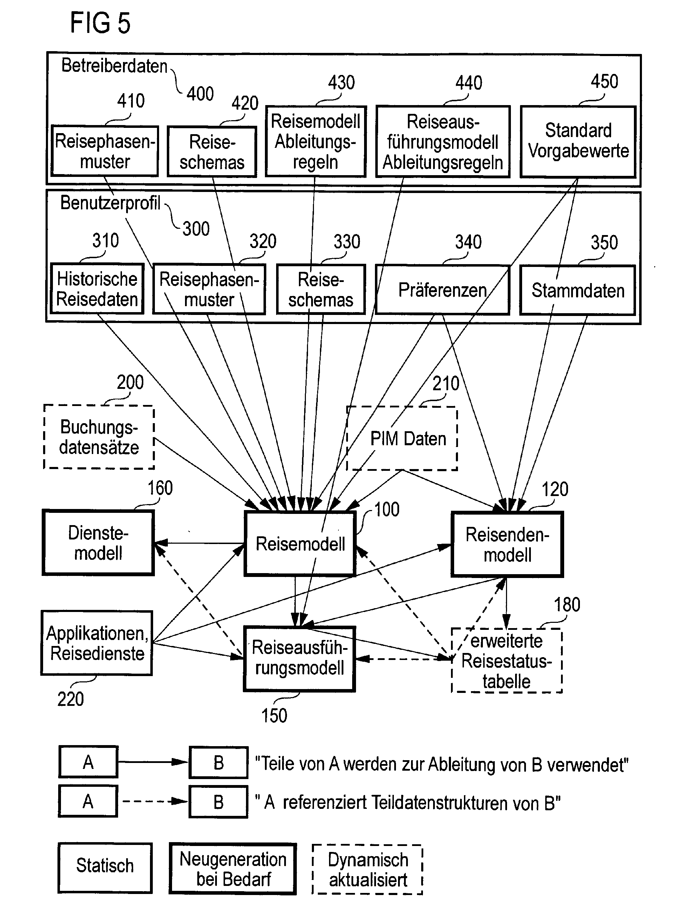

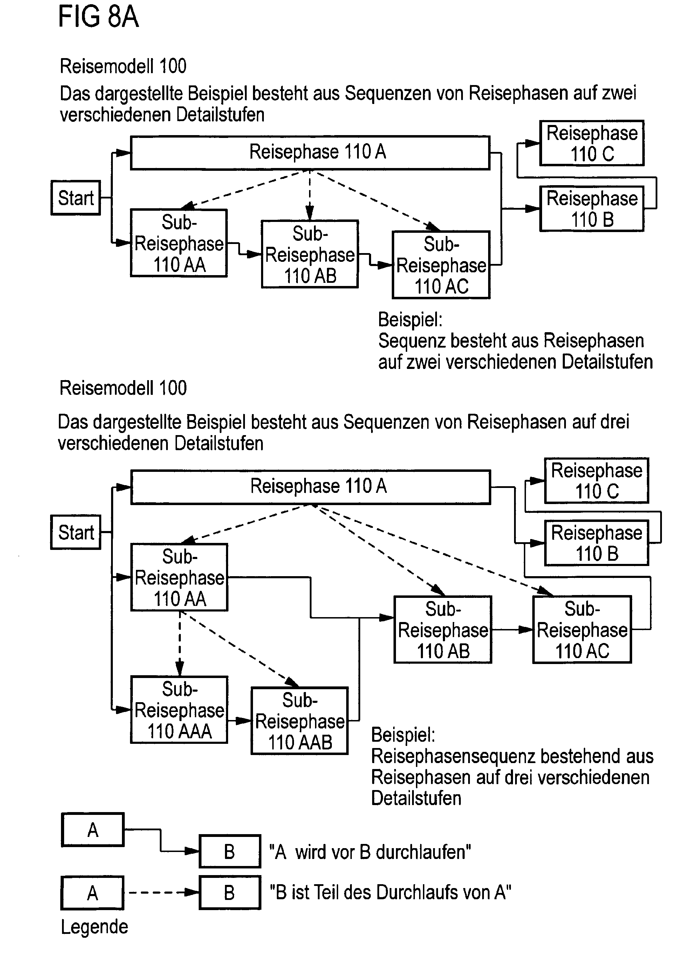

Die geplante Reise wird in Sequenzen von Reiseabschnitten (110, s. Figur 8a) als Teil des Reisemodells (100) gegliedert. Zum Aufbau der Sequenz von Reisabschnitten des Reisemodells werden, wie Figur 5 zeigt, auch Buchungsdaten (200) verwendet, zusätzlich werden auch nicht buch- oder reservierbare Reisemittel und weitere Tätigkeiten des Reisenden während der Reise aus Reisemusterdaten (410, 420) berücksichtigt. Reiseabschnitte werden mit einem Bezeichner (111, 110a, 110 AA) versehen, der im Benutzerdialog den Reiseabschnitt repräsentiert.

Die Sequenzen von Reiseabschnitten sind durch zeitliche und örtliche Eigenschaften eindeutig geordnet. Dieses Ordnungskriteriums wird zur Unterstützung der Benutzerführung bei der Bedienung von Reisediensten, insbesondere der mobilen Nutzung von Reisediensten unter Verwendung von Kommunikationsendgeräten verwendet.

Informationsfilter: "Focus auf den aktuellen Reiseabschnitt":

Die reisefortschrittsspezifische Bereitstellung dynamisch aktualisierter Informationen mittels Push- und Pull-Service fokussiert die Aufmerksamkeit des Reisenden auf zeitlich- und örtlich naheliegende Informationen und Reisedienste.
Diese Fokussierung wird gemäß dem erläuterten Verfahren sowohl bei Push- als auch bei Pull-Diensten angewandt.

Anwendung des Filters zur Bereitstellung von Pull-Diensten:
Im Zuge des Reiseablaufs stellen Reisedienste Dialogmenüs bereit, welche Menüpunkte zu Auswahl und Abruf von Informationen und Teildiensten durch den Benutzer beinhalten, die sich auf fest vorgegebene Kategorien von reisebezogenen Informationen und Teildiensten beziehen und deren dynamisch veränderbaren Inhalte sich ausschließlich auf den aktuell durchlaufenen Reiseabschnitt beziehen.

Beispiele für reisebezogene Menüpunkte mit reiseabschnittsspezifischen Inhalten:
"Was wird benötigt ?", "Was wird als Nächstes benötigt ?", "Was ist zu tun ?", "Was ist als Nächstes zu tun ?", "Die nächsten Schritte".

Anwendung des Filters zur Bereitstellung von Push-Diensten:

Bei Push-Diensten wird das Verfahren auf die Filterung von Kanalinhalten angewandt. Während des Durchlaufens von Reiseabschnitten werden Kanalinhalte aktuell gemäß durchlaufenem Reiseabschnitt gefiltert und verschickt.

Der aktuell durchlaufene Reiseabschnitt wird dabei durch einen Reiseüberwachungsdienst identifiziert. Die Auswahl und Anwendung eines reiseabschnittsspezifischen Filters auf reisebezogene Informationen durch den Reisenden ermöglicht die Anwendung einer Vielzahl von Filter-Attributen in einem Schritt, gemäß den im ausgewählten Reiseabschnitt gesetzten Attributwerten:
- Weg
- Zeit
- Reisemittel / Reisemodi
- Prozesszustände bei der Nutzung von Reisemitteln

Vorteilhaft ist insbesondere eine mehrstufige Anwendung des Mechanismus "Focus auf den aktuellen Reiseabschnitt"

Bemerkungen:
- Reiseabschnitte (z.B. Fig. 8a, Bezugszeichen 110A) sind wiederum in Sequenzen von detaillierteren Unterreiseabschnitten (z.B. Fig. 8a, Bezugszeichen 110AA, 110AB, 110AC) gegliedert.
- Innerhalb der Sequenzen von Unterreiseabschnitten des aktuell durchlaufenden Hauptreiseabschnittes gibt es auch immer einen aktuell durchlaufenen Unterreiseabschnitt.
- Typischer Reisehauptabschnitt: Reisestart, Transportmittelnutzungsphasen, Reiseanschlußpunkte, und Reiseziel bei Hin- und Rückreise
- Typischer Reiseunterabschnitt: Sequenz von Aktivitäten zur Nutzung, Rückgabe, Besteigen, Verlassen oder Wechseln von Transportmitteln in Reisehauptabschnitten, insbesondere das Durchlaufen von Fußwegen und Kontrolpunkten. Pro Reiseunterabschnitt wird eine Liste notwendiger und unterstützender Reisemittel verwaltet und bei Bedarf angezeigt, z. Bsp.: Wegbeschreibungen, Dokumente und Bordkarten.

Durch die Verwendung des Mechanismus "Focus auf den aktuellen Reiseabschnitt" wird eine Menge von Informationen und Teildiensten gewonnen. Eine noch fokussiertere Auswahl von Information oder Teildiensten, kann dadurch unterstützt werden, das in einer weiteren Stufe der Benutzerführung Mengenelemente zunächst präsentiert und bei explizit per Benutzereingabe aktivierter weiterer Fokusierung gemäß dem aktuellen Reiseunterabschnitt selektiert werdend. So kann die vorselektiert abrufbare Menge von Informationen und Teildienste auf die im aktuell durchlaufenen Reiseunterabschnitt relevanten Informationen und Teildienste weiter eingeschränkt werden. Dies kann auch per Voreinstellung automatisch erfolgen.
Wird nun eine Menge von Informationen und Teildiensten angezeigt so kann der Reisende auch defokussieren in dem er wieder auf den Reiseabschnitt der nächsthöheren Detailstufe zurück geht.

Vorteilhaft ist insbesondere eine noch fokussiertere Anwendung von Informationsfiltern durch Auswahl von Reiseunterabschnitten innerhalb von rekursiv verfeinerten Sequenzen von detaillierteren Reiseunterabschnitten des aktuell durchlaufenen Reiseabschnittes.

Mechanismus "Benutzerführung unter Verwendung von Reiseabschnittssequenzen der geplanten Reise":

Es erfolgt eine Benutzernavigation zum Abruf von Informationen und Starten von Aktivitäten der Reisedienste in direktem Bezug zu einzelnen Abschnitten der geplanten Reise.

Die geplante Reise ist in Sequenzen von Reiseabschnitten gegliedert. Diese Sequenzen von Reiseabschnitten lassen sich durch zeitliche und örtliche Eigenschaften der Reiseabschnitte von Reisebeginn bis Reiseende eindeutig ordnen. Die Bezeichner der Reiseabschnitte werden in Form von, gemäß der Ordnung der Reiseabschnittssequenzen im Modell der persönlichen geplanten Reise, geordneten Auswahllisten dem Benutzer präsentiert. Wählt der Benutzer einen Reiseabschnittsbezeichner aus, dann wirkt der ausgewählte Reiseabschnitt als Informationsfilter auf die Menge aller im Zuge der Reise abrufbaren Informationen und Teildienste.

Vorteilhaft ist insbesondere, wenn im Zuge der Nutzung des Mechanismus "Benutzerführung unter Verwendung von Reiseabschnittssequenzen der geplanten Reise" der aktuell durchlaufene Reiseabschnitt graphisch in der geordneten Reiseabschnittsbezeichnerauswahlliste hervorgehoben wird.

Mehrstufige Anwendung des Mechanismus "Benutzerführung unter Verwendung von Reiseabschnittssequenzen der geplanten Reise":

Wurde zunächst der Mechanismus "Benutzerführung unter Verwendung von Strukturinformation der geplanten Reise" benutzt, so wird der ausgewählte Reisehauptabschnitt als Informations-Filter auf die Menge aller im Zuge der Reise darstellbaren Informationen und Teildienste angewendet. Im Ergebnis wird nun eine Menge von Informationen und Teildiensten zur Auswahl angeboten, welche ausschließlich mit dem durch den Benutzer ausgewählten Reisehauptabschnitt verknüpft ist.
Eine noch fokussiertere Auswahl von Informationen oder Teildiensten aus dieser Menge kann dadurch gewonnen werden, das in einer weiteren Stufe der Benutzerführung Mengenelemente über die geordnete Liste von Unterreiseabschnittsbezeichnern indiziert abrufbar sind. So kann die vorselektiert abrufbare Menge von Informationen und Teildienste auf die im aktuell ausgewählten Reiseunterabschnitt relevanten Informationen und
Teildienste weiter eingeschränkt werden.

Wird nun eine Menge von Informationen und Teildiensten angezeigt so kann der Reisende auch defokussieren in dem er wieder auf den Reiseabschnitt der nächsthöheren Detailstufe zurück geht.

Vorteilhaft ist insbesondere die Nutzung von Reiseabschnittsauswahllisten auf zwei unterschiedlichen Detaillierungsebenen.

Typischer Reisehauptabschnitt:
Reisestart, Transportmittelnutzungsphasen, Reiseanschlußpunkte, und Reiseziel bei Hinund Rückreise

Typischer Reiseunterabschnitt:
Sequenz von Aktivitäten zur Nutzung, Rückgabe, Besteigen, Verlassen oder Wechseln von Transportmitteln in Reisehauptabschnitten, insbesondere das Durchlaufen von Fußwegen und Kontrolpunkten
Pro Reiseunterabschnitt wird eine Liste notwendiger und unterstützender Reisemittel verwaltet und bei Bedarf angezeigt, insbesondere Wegbeschreibungen, Dokumente, Bordkarten,

Vorteilhaft ist insbesondere eine kombinierte mehrstufige Anwendung der Mechanismen "Focus auf den aktuellen Reiseabschnitt" und "Benutzerführung unter Verwendung von Reiseabschnittssequenzen der geplanten Reise"

Es wird unterstützt, dass zunächst einfach oder mehrfach der Mechanismus "Focus auf den aktuellen Reiseabschnitt" verwendet wird und dann der Mechanismus "Benutzerführung unter Verwendung von Reiseabschnittssequenzen der geplanten Reise" auf den aktuellen Reiseabschnitt einfach oder mehrfach angewandt wird, um gezielt die vorselektiert abrufbare Menge von Informationen und Teildienste auf die im aktuell selektierten Reiseunterabschnitt relevanten Informationen und Teildienste weiter einzuschränken.

Wird nun eine Menge von Informationen und Teildiensten angezeigt, so kann der Reisende auch defokussieren in dem er wieder auf den Reiseabschnitt der nächsthöheren Detailstufe zurück geht.

Die Anwendung der beschriebenen Mechanismen empfiehl sich zur strukturierten Navigation und Auswahl von reiseablaufspezifischen Objekten, insbesondere Informationen zu Reiseorten und Reisezeiten, System- und Benutzeraktivitäten und Reisemitteln zur Verarbeitung durch Reiseablaufunterstützungsdienste, -überwachungs-dienste und planungsdienste.

Pro-aktive Rechenprozesse in elektronischen Informationssystemen vergleichen den Sollverlauf einer Reise mit dem wirklichen Reisefortschritt eines Reisenden. Auf Basis dieser Information werden der reisephasenspezifische Abruf von Informationen und Diensten während der Reise gesteuert.

Der Sollablauf einer Reise wird vom elektronischen Informationssystem auf Basis eines Modells der persönlichen geplanten Reise simuliert und mit dem tatsächlichen Reisefortschritt abgeglichen. Das Reisemodell beschreibt dazu die einzelnen aufeinanderfolgenden Phasen (Abschnitte) einer geplanten Reise und die darin jeweils verwendeten Reisemittel.
Der geplante Durchlauf der Reisephasen ist durch einen zeitlichen Sollverlauf in Kombination mit einem örtlichen Sollverlauf der gebuchten Reise spezifiziert.

Das Verfahren basiert auf der automatisiertem online Erfassung aktueller reisefortschrittsrelevanter Informationen (z.B. Aufenthaltsort des Reisenden, Zeit, aktuelle Infomationen zur Reisemittelnutzung) durch pro-aktive informationsverarbeitende und kommunizierende Prozesse während des Durchlaufs der einzelnen Reiseabschnitte.

Das Verfahren umfaßt hier:
1. Anlage und Nutzung persönlicher multimodaler (Verwendung von Reisemitteln vielfältiger Art) Reisemodelle zum Zweck der Steuerung und Bereitstellung folgender Verfahren:
   - pro-aktive Reiseabschnittsidentifikation
   - Abruf von Informationen und Teildiensten
      1. insbesondere die gemäß dem aktuell durchlaufenen Reiseabschnitt gefilterte/fokussierte Bereitstellung dieser Informationen
      2. insbesondere der mehrstufig rekursiv verfeinerten reiseabschnittsfokussierten Bereitstellung dieser Informationen
      3. insbesondere der Nutzung der Sequenz von Reiseabschnitten zur Navigation durch und Auswahl von reisebezogenen Informationen
      4. insbesondere der mehrstufig rekursiv verfeinerten Anwendung von Verfahren 3.)
      5. insbesondere einfacher oder mehrfacher Anwendung des Verfahren 1.) mit anschließender einfacher oder mehrfacher Anwendung des Verfahren 3.).
2. der Anwendung eines Verfahrens zur pro-aktiven Reiseabschnittsidentifikation
3. dem Verfahren zum Abruf von Informationen und Teildiensten
   - pro-aktive Reiseabschnittsidentifikation
   - Abruf von Informationen und Teildiensten
      1. insbesondere die gemäß dem aktuell durchlaufenen Reiseabschnitt gefilterte/fokussierte Bereitstellung dieser Informationen
      2. insbesondere der mehrstufig rekursiv verfeinerten reiseabschnittsfokussierten Bereitstellung dieser Informationen
      3. insbesondere der Nutzung der Sequenz von Reiseabschnitten zur Navigation durch und Auswahl von reisebezogenen Informationen
      4. insbesondere der mehrstufig rekursiv verfeinerten Anwendung von Verfahren 3.)
      5. insbesondere einfacher oder mehrfacher Anwendung des Verfahren 1.) mit anschließender einfacher oder mehrfacher Anwendung des Verfahren 3.).

Wesentliche Komponente des im folgenden geschilderten, beispielhaften Verfahrens zur reisephasenspezifischen Steuerung des Informationsabrufes ist eine ,Personal Trip Stage Aware Information Retrieval Engine' (=PTAIRE= Vorrichtung (10) zur Überwachung einer Reise und zur Ausführung von Diensten), welche die Steuerung und Bereitstellung reisebezogener Informationen und Teildienste ermöglicht.

Insbesondere die effiziente Bereitstellung eines solchen Massendienstes wird vom beschriebenen Ausführungsbeispiel realisiert. Die PTAIRE ist also ein informationsverarbeitendes und kommunizierendes System, welches reisephasenbezogene Informationen gemäß dem in der vorliegenden Erfindung beschriebenen pro-aktivem Verfahren sehr focussiert einer Vielzahl von Reisenden bereitstellt.

Die PTAIRE kommuniziert mit dem Reisenden unter Verwendung von mobilen und festnetzgebundenen Kommunikationsendgeräten, mittels synchronen oder asynchronen, sowohl durch das Kommunikationsendgeräte als auch durch die Kommunikationsserverseitige PTAIRE initiierte Protokolle.

Für den praktischen Einsatz ist die PTAIRE an existierende Kommunikationssysteme und Informationsverarbeitungssysteme anzuschließen. Fig. 3 zeigt die Einbettung der PTAIRE in ein mögliches Lösungsumfeld. Die PTAIRE (96) ist in ein beliebiges Kommunikations-Portal (95) integriert. An dieses Portal sind über Kommunikationsnetze (Figur 3, Bezugszeichen 93, 94) festnetzgebundene und mobile Kommunikations- und Informationsendgeräte (91,92) angeschlossen. Teile der PTAIRE können aus Performanz und Verfügbarkeitsgründen auch auf dem mobilen Endgerät ausgeführt werden (91). Zusätzlich ermöglicht die PTAIRE die Nutzung zustandsloser "typischer browserbasierter" mobiler Endgeräte (92). Die PTAIRE ist an Kommunikations-netze (97) angeschlossen.

Die PTAIRE wird durch Reisebuchungssysteme über getätigte Buchungen gemäß Figur 5, Nr 26 informiert und angestoßen (27). Daraufhin erzeugt die PTAIRE im Zuge einer Analyseund Initialisierungsphase, ein statisches Modell des Reisenden (29, 120), ein statisches Modell der gebuchten Reise (31, 100) und leitet aus diesen Modellen das statische Reiseinformationsabruf-Steuerungsmodell (32, 150) ab.

Teilverfahren zur Unterstützung reiseablaufspezifischer Informationsbereitstellung aus fragmentierten Datensätzen gemäß dem beschriebenen Ausführungsbeispiel:

Eine geplante persönliche Reise wird mit ihren Buchungsdatensätzen unter Verwendung eines Informationssystems erfasst und durch dieses IT-System, im weiteren Personal Trip Stage Aware Information Retrieval Engine (PTAIRE) genannt, in geordnete Sequenzen von Reisephasen (Reisemodell) gegliedert. Die Ordnung der Sequenzen ergibt sich dabei primär aus den zeitlichen und räumlichen Attributen der geplanten Reiseaktivitäten, unter anderem der geplanten Nutzung von gebuchten Reiseresourcen. Die Sequenzen der Reisephasen werden in elektronischer Form im Speicher der PTAIRE als statisches Reisemodell abgelegt.

Aus dem Reisemodell und dem Modell des Reisenden wird das Reiseinformationsabruf-Steuerungsmodell generiert. Während der Ausführung der Reise durch den Reisenden wird dieses Reiseinformationsabruf-Steuerungsmodell abgearbeitet. Die im
Reiseinformationsabruf-Steuerungsmodell mit den einzelnen Reisephasen verknüpften elementaren Reparaturfunktionen werden während dem Durchlaufen des entsprechenden Reiseabschnittes aktiv.

Im Zuge von Reiseanschlußplanung oder der Neuplanung der Reise kann diese Reiseinformationsabruf-Steuerungsmodell von der PTAIRE dynamisch ergänzt oder typischerweise teilweise ersetzt werden.

Beschreibung der Verfahrensschritte:

Die Erstellung des Reisemodells (100), des Modells des Reisenden (120) und des daraus abgeleiteten Reiseinformationsabruf-Steuerungsmodells (150) erfolgt automatisch im Zuge der Verarbeitung der Buchungsdaten des Reisenden (200, 27, 28) durch die PTAIRE. Die einzelhen Schritte des Verfahrens zur Erstellung eines Reiseinformationsabruf-Steuerungsmodell (150) sind im folgenden beschrieben.
1. Aufbau des Modell des Reisenden (29):

Benutzerprofile und explizite Benutzervorgaben initialisieren das Modell des
Reisenden mit statischen Daten. Ergänzungen des Modells werden über Personal
Information Management Systeme eingelesen. Das Modell des Reisenden beinhaltet:
   - die geplanten und aktuell verwendeten mobilen Kommunikationsgeräte (136),
   - dem während der geplanten Reise auftretenden Kommunikationskontext (130) bestehend aus:

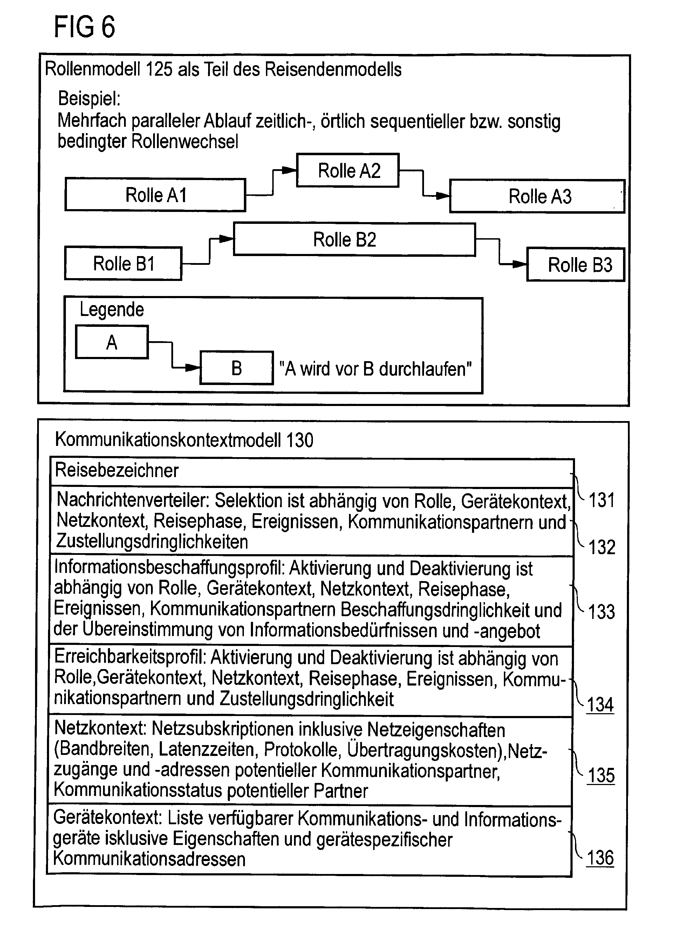

   - Erreichbarkeitsprofil (Figur 6, Bezugszeichen 134),
   - Kommunikationsnetzzugang (135),
   - Kommunikationskostenprofil (135),
   - Erreichbarkeitsprofilen von Kommunikationspartnern (135),
   - den während der geplanten Reise ausgeübten Rollen des Reisenden (126) (anonym, nicht anonym, Geschäftreisenden, Privatreisender, Besprechungsteilnehmer, Hotelgast, Passagier, Fahrzeugführer) und den hiervon ableitbaren rollen-, orts- und zeitabhängigen Anforderungen an die Reiseüberwachungs- und Reparturdienste (126)
2. Aufbau des Reisemodells (31):
   Die PTAIRE liest zunächst Buchungsdatensätze (200), Informationen aus persönlichen Informationmanagementwerkzeugen (PIM) (210) und Benutzervorgaben (310, 340) ein. Die Buchungsdatensätze und die PIM-Daten initialisieren das Modell der Reise (100). Zum Aufbau des Reisendenmodells werden auch die im
   Benutzerprofil (300) der PTAIRE stehenden Präferenzen und Vorgaben für
      - Benutzerspezifische Orte und relative Zeitangaben zur Aktivierung von Reiseüberwachungs- und -reparaturdiensten in Relation zu typischen Reisephasen wie z.Bsp.: zu Reisebeginn oder zum Ende der Reise.
      - Präferenzen für die Nutzung von Reisemitteln (124) in Abhängigkeit von Reiseziel, Reisezielentfernung, Reisezeitpunkt und Reisetypen (wie etwa Geschäfts- oder Privatreise, Einzel- oder Gruppenreise),
      - Muster für typische persönliche Reisen (127) (Sequenzen von Reisephasen)
         eingelesen.

Auswahl einzelner Reisephasenmuster und typischer Sequenzen:
Die PTAIRE wählt für das Modell der Reise ein passendes Reisephasenmuster aus einer vorgegebenen Menge von Reisephasenmustern aus. Es werden hierzu typische Reisephasenmuster von dem Reiseinformationsabrufdiensteanbieter in der PTAIRE hinterlegt und vorgegeben. Im folgenden sind einige typische Reisephasenmustern aufgezählt
Reisebeginn, Am Wohnort zu Beginn der Reise, Weg vom Wohnort zum Abflug-Flughafen zu Beginn der Reise, An der Arbeitsstelle zu Beginn der Reise, Weg von der Arbeitsstelle zum Abflug-Flughafen zu Beginn der Reise, Am Abflug-Flughafen, Im Flieger, Am Ziel-Flughafen, Auf dem Weg zum Hotel, Im Hotel, Auf dem Weg zur Besprechung, Weg zum Abflug-Flughafen während der Rückreise, Am Abflug-Flughafen während der Rückreise, Im Flieger während der Rückreise, Am Ziel-Flughafen während der Rückreise, Weg zur Arbeitsstelle während der Rückreise, An der Arbeitsstelle nach der Rückreise, Weg zum Wohnort während der Rückreise, Am Wohnort nach der Rückreise.

Die Auswahl einer Menge von Reisephasenmustern, welche die gebuchte Reise am besten abbilden, kann durch manuelle Eingaben des Reisenden oder des Reparaturdiensteanbieters unterstützt werden. Ein
Reparaturdiensteanbieter kann die Menge der vorgegebenen
Reisephasenmuster ergänzen. Damit das beschriebene Auswahlverfahren automatisch, bzw. mit geringer Unterstützung des Reisenden funktioniert, müssen entsprechende Selektionsmerkmale in den Buchungsdatensätzen implizit enthalten, oder durch den Reparaturdiensteanbieter mit den Buchungsdatensätzen verknüpft worden oder implizit durch das Modell des Reisenden vorgegeben sein. Vorgaben für typische Reisephasenmuster im Modell des Reisenden beeinflussen also den Aufbau des Reisemodells. Typische Modelle "ähnlicher" Reisen für bestimmte Typen von Reisenden können vom Reparaturdiensteanbieter als Schematas (nicht instanziierte Sequenzen von Reisephasen) vorgegeben und in der PTAIRE abgelegt werden. Die PTAIRE und der Reisende können dann gebuchte Reisen mit den vorgegebenen Schematas vergleichen und verknüpfen.
Reisephasen werden auf unterschiedlichen Detailebenen modelliert und abgearbeitet. Zudem läßt sich eine Reisephase hierarchisch in Sub-Reisephasen zergliedern. Typischerweise reicht zur Steuerung der Erreichbarkeit die Modellierung der Reisephasen auf zwei oder drei unterschiedlichen Verfeinerungsgeraden aus.

Reisephasenattribut Reisemittel:
Ein wesentliches Selektionsmerkmal zur Identifizierung von passenden Reisephasenmustern aus einer Menge von vorgegebenen Reisephasenmustern ist die verwendete Reiseresource, die während einer Reisephase überwiegend genutzt wird (z.Bsp.: Flugzeug, Kfz, S-Bahn, zu Fuß,...). Diese Reiseresource wird beim Einlesen von Buchungsinformationen als Attribut erfaßt und kann daher mit dem entsprechenden Attribut der vorgegebenen
Reisephasenmusters verglichen werden.
Innerhalb einer Reisephase wird typischerweise ein Reisemittel hauptsächlich genutzt. Zusätzlich zu dieser Hauptresource sind auch abhängige
Reiseresourcen im Reisemodell darstellbar.
Z. Bsp.: Ein Gate ist eine einem Flug zugeordnete abhängige Resource, deren Verfügbarkeit und Status vom Reiseüberwachungsdienst OnTrip festgestellt werden muß.

Reisephasenattribut Reisemittelanbieter:
Ein weiteres wesentliches Selektionsmerkmal zur Identifizierung von passenden Reisephasenmustern aus einer Menge von vorgegebenen Reisephasenmustern ist der Reisemittelanbieter. Der Reisemittelanbieter wird beim Einlesen von Buchungsinformationen als Attribut erfaßt und belegt daher das entsprechenden Attribut des vorgegebenen Reisephasenmusters im Reisemodell. Die Nutzungsbedingungen bestimmter Reisemittel können sich je nach Reisemittelanbieter unterscheiden. Typischerweise durch den Betreiber der PTAIRE oder in speziellen Fällen durch den Reisenden können entsprechende Regeln zur Beschreibung der vertragskonformen Nutzung vorgegeben werden. Auch die Verfahren zur Überprüfung der Verfügbarkeit von Reisemitteln können variieren je nach Reisemittelanbieter.

Übersetzung von Buchungsdaten in Reisephasenbeschreibung:
1. Die PTAIRE liest Informationen aus den vorliegenden Buchungsdatensätze ein. Da diese Buchungsdatensätze gemäß den Vorgaben vielfältiger Reiseagenturen und Buchungssysteme erstellt wurden, müssen sie durch die PTAIRE in ein einheitliches Format (generisches Buchungsdatenformat) übersetzt werden. Die Buchungsdatensätze können zu diesem Zweck in vielfältiger elektronischer Weise in die PTAIRE übernommen werden.
2. Die PTAIRE trägt die im generischen Buchungsdatenformat vorliegenden Werte eines Buchungsdatensatzen in die Attribute der ausgewählten Reisephasenmuster ein.

Reisephasenattribute Start- und Zielort, bzw. Start- und Zielerreichungszeitpunkt:
- Beispiel: Nach dem Einlesen von Personal Name Records (PNRs), liegen diese im generischen Buchungsdatenformat vor. Eine Flug-Reisephase beinhaltet die Attribute Start- und Zielort, bzw. Start- und Landezeitpunkt. Diese Attribute werden mit den Werten aus dem generischen Buchungsdatenformat der PNRs belegt.
- Die belegten (instanziierten) Attribute eines Reisephasenmusters ermöglichen die Steuerung der Reiseinformationsabrufdienste, gemäß dem Reiseinformationsabruf-Steuerungsmodell, während des Ablaufs einer konkret geplanten und gebuchten Reise ab. D.h. die mit einer Reise verbundenen Buchungsdatensätze für Reisemittel instanziieren das Modell einer geplanten Reise, und das abgeleitete Reiseinformationsabruf-Steuerungsmodell und definieren damit die zeitlichen und örtlichen Vorgaben im Sollverlauf der gebuchten Reise.

Aufbau der Sequenzen der Reisephasen:
Die Reisephasen werden nun von der PTAIRE gemäß des hierarchischen
Verfeinerungsgerades sortiert, und in Sequenzen von Reisephasen verschiedener Detailierungsgrade angeordnet. Anhand der zeitlichen und räumlichen Ordnung der aus konsistenten Buchungsdaten abgeleiteten Reisephasen können diese von der PTAIRE in eine Sequenz gebracht werden. Typischerweise reicht zur Steuerung der OnTrip Services die Modellierung der Reisephasen auf zwei oder drei unterschiedlichen Verfeinerungsgeraden aus.

3. Aufbau des Reiseinformationsabruf-Steuerungsmodells:
- Pro-aktive Dienste (Push) binden nun Reparaturfunktionen an das Durchlaufen bestimmter Reisephasen. Reparaturfunktionen können dabei auch an mehrere Reisephasen und zeitlich oder örtlich relativ an das Durchlaufen von Reisephasen gebunden werden.
- Das so ergänzte Reiseinformationsabruf-Steuerungsmodell wird in Datenstrukturen übersetzt, die bei der Steuerung der Dienste während der Reise effizient interpretiert werden können.

Weitere Merkmale des Beispielverfahrens:
- Ändern sich die Buchungen, dann wird die PTAIRE von den angeschlossenen Buchungssystemen entsprechend informiert. Die PTAIRE berechnet dann Teile des Reisemodells neu. Entsprechend wird das Reiseinformationsabruf-Steuerungsmodell teilweise neu aufgebaut.
- Die automatisch erstellten Reisephasen und die daran gebundenen Reparaturfunktionen werden miteinander assoziiert und gegebenenfalls durch den Reisenden unter Nutzung von Admininstrationswerkzeugen ergänzt und verfeinert. Wird eine Reparaturfunktion lediglich in einer sehr speziellen Reisephase (detailierter Teilprozess) aktiv, so muss die entsprechende Reisephase hinreichend genau modelliert und das entsprechende Muster zum Aufbau des Reisemodells verfügbar sein.
- Die Rollen, die ein Reisender im Zuge der Reisens ausübt, sind mit rollenspezifischen Reparaturbedürfnissen verknüpft und werden mit den Reisephasen verknüft, in denen der Reisende in der gegebenen Rolle aktiv ist.
- Für die Generierung des Reiseinformationsabruf-Steuerungsmodells ist eine unvollständige lückenhafte Sequenz von Reisephasen ausreichend, solange es keine Wiedersprüchen in den Buchungsdatensätzen gibt. Schon die Instanziierung einzelner Reisephasen ermöglicht die situationsbezogene Reiseerreichbarkeit. Insbesondere schlägt die PTAIRE zur Vervollständigung des Reiseinformationsabruf-Steuerungsmodells persönliche Vorgaben, bzw. falls diese nicht vorhanden sind, Systemvorgaben vor. Diese vorgegebenen Muster und Werte kann der Benutzer durch persönliche Reparatur-Vorgaben in seinem Profil ergänzen.

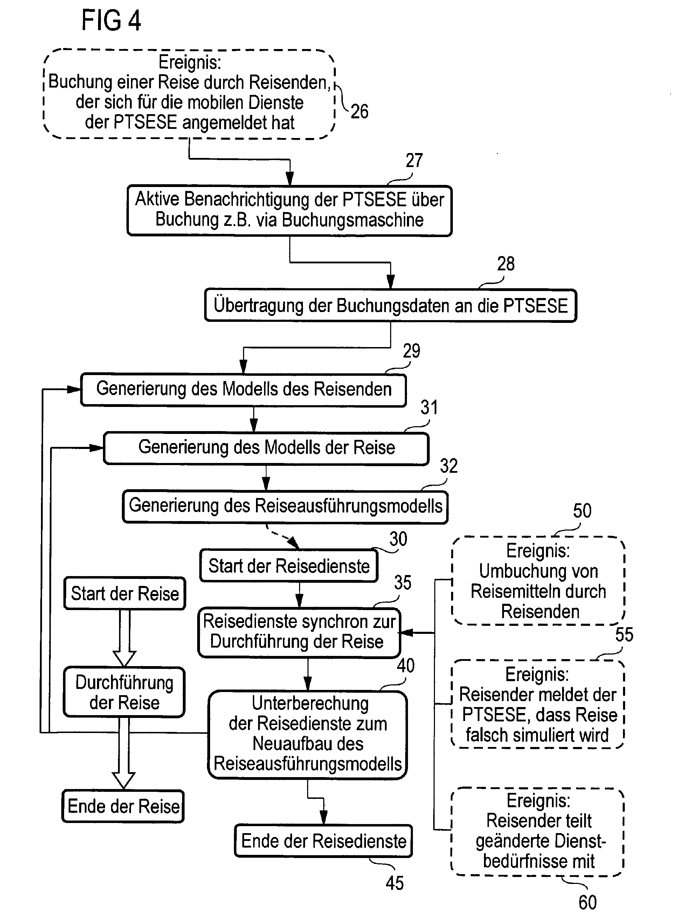

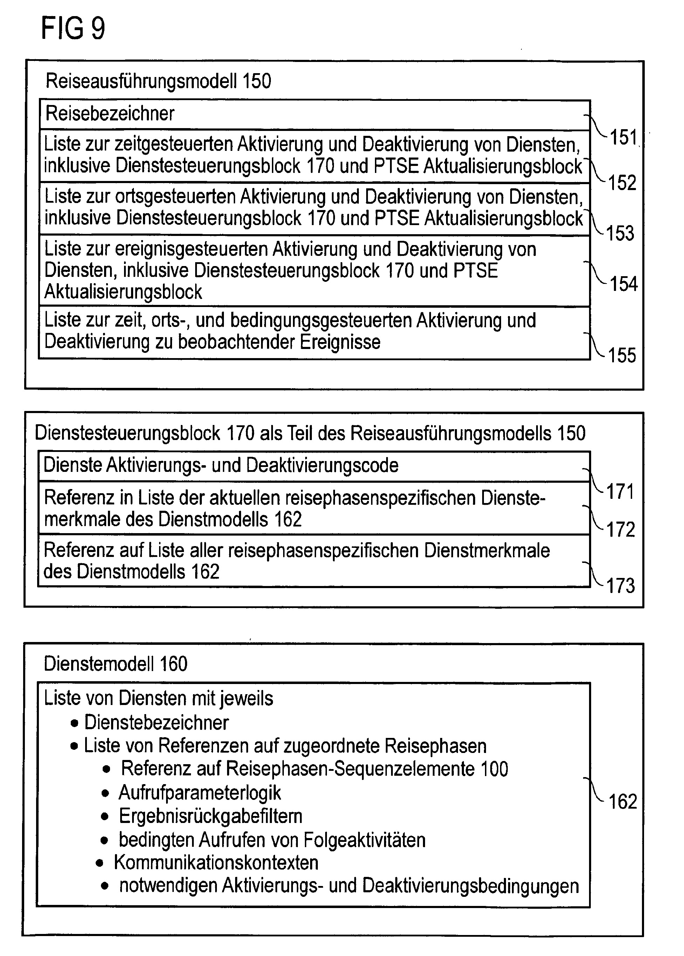

Erläuterung des Ausführungsbeispiels anhand der Figuren:
- Die PTAIRE wird also durch Reisebuchungssysteme über getätigte Buchungen gemäß Fig 4 , Bezugszeichen 26 informiert und angestoßen (27). Daraufhin erzeugt die PTAIRE im Zuge einer Analyse- und Initialisierungsphase, ein statisches Modell des Reisenden (29, 120), ein statisches Modell der gebuchten Reise (31, 100) und leitet aus diesen Modellen das statische Reiseinformationsabruf-Steuerungsmodell (32, 150) ab.
   - Das statische Modell der gebuchten Reise(100) besteht aus der Sequenzen der von der PTAIRE aus den Buchungsdaten abgeleiteten bzw. der ausgewählten ergänzenden Reisephasen (100). Allgemein könnten im Reisemodell (100) beliebige rekursiv verfeinerte Sequenzen von Reisephasen modelliert werden. In der Praxis reichen jedoch typischerweise drei Detailsstufen aus. Die modellierten Reisephasen (110) beinhalten Attribute, wie z. Bsp.: die an diese Reisephasen gebundenen, notwendigen bzw. nutzbaren Reisemitteln (115). Attribute einzelner Reisephasen werden dabei mit Benutzerereichbarkeitsprofilen und -präferenzen aus dem Modell des Reisenden (120) belegt. Die Bereitstellung der auf die Bedürfnisse des Reisenden zugeschnittener Reparaturfunktionen kann damit reisephasenbezogen geplant werden.
   - Das Modell des Reisenden (120) wird weiter unten erläutert.
   - Das statische Reiseinformationsabruf-Steuerungsmodell (150) steuert die Bereitstellung der gewünschten Reisedienste synchron zur Durchführung der Reise durch den Reisenden. Das heißt, das die Bereitstellung der auf die Bedürfnisse des Reisenden zugeschnittener Reparaturfunktionen, synchron zum tatsächlichem Durchlaufen der Reisephase also pro-aktiv erfolgt.
- Zum Aufbau des Reiseinformationsabruf-Steuerungsmodells werden alle Reparaturfunktionen für die zeitlich und örtlich gesteuerte Ausführung synchron zur geplanten Durchführung der Reisephasen vorkonfiguriert (Figur 9, Bezugszeichen 152, 153, 154, 155). Das bei der Planung der Reisedurchführung vorliegende Wissen (200, 210, 300, 400) über die gebuchte Reise und den Reiseprozess wird also in Laufzeitstrukturen (150) zur Steuerung der synchron zur Reisedurchführung bereitgestellten Reparaturfunktionen compiliert. Dieser Systemprozess verwendet eine Menge von Regeln (Figur 5, Bezugszeichen 440), die den Beginn, das Ende (152, 153, 154, 155), und die konkreten Reparaturfunktionen im Kontext der aktuellen Reisesituation (z.Bsp.:
   - Durch den reiseabschnittsspezifischen Kommunikationskontext werden die Benachrichtigung des Reisenden bzw. der Aufbau von Kommunikationssessions gesteuert.
   - Zeiten der nächsten Wiederereichbarkeit des Reisenden gemäß nachfolgender Reiseabschnitte,
   - Eigenschaften der Kommunikationsmittel (Endgeräte und Netzkontext) bei der nächsten Wiederereichbarkeit gemäß nachfolgender Reiseabschnitte
   - Überwachung der Verfügbarkeit relevanter Kommunikationsnetze)
      in Abhängigkeit von
      - Servicepräferenzen des Reisenden (124, 125, 126, 130),
      - zeitlichen und örtlichen Parameter einer Reisephase (112,113),
      - relativen und absoluten Zeiten und Orte (112,113),
      - dem potentiellen Eintreffen von für die Durchführung der persönlichen Reise relevanten Ereignissen (118),
      - Buchungstypen (124),
      - verwendeten Reisemitteln (115) und
      - Reisetypus (410, 420, 310, 320, 330, 127)
         beschreiben. Die verwendeten Regeln zur Deduktion der Überwachungsfunktionen gemäß der Reiseanbieterspezifischen Nutzungskriterien für multimodale Reisemittel werden typischerweise vom Betreiber des Systems vorgegeben (430,440). Darüber hinaus können Regeln vom Endbenutzer aktiviert bzw. deren Regelmuster parameterisiert werden.
- Die PTAIRE legt also vor dem Beginn der Bereitstellung von Reisediensten das Reiserepartur-Steuerungsmodell zur zeit-, orts-, und/oder ereignisgesteuerten Ausführung von Reparaturdiensten (150) an. Wird die Reise wie geplant durchgeführt, dann beinhaltet die statische Datenstruktur des Reiseinformationsabruf-Steuerungsmodells (Sequenz von Dienstaktivitäten mit verknüpften Sollwerten zur zeit-, örtlichen- und/oder ereignisgesteuerten Steuerung der Reparaturdienste) alle zur Steuerung der reisephasenspezifischen Überwachungs- und Reparaturdienste notwendigen Daten. Zur Aktivierung und Deaktivierung von Diensten reicht dann ein Vergleich der Variablen in der erweiterten Reisestatustabelle (180, 182, 183, 184) mit den dienstspezifischen Konstanten im Reiseinformationsabruf-Steuerungsmodell (152-155) aus. Das heißt, das Anlegen dynamischer Datenstrukturen zur Steuerung der Reparaturdienste ist nicht zwingend erforderlich. Es können also sehr effizient verarbeitbare und damit massendienstfähige Laufzeitdatenstrukturen zur Steuerung der Erreichbarkeit verwendet werden.
- Im Fall von Reiseausnahmesituationen, und damit einhergehenden spontaner Reise-Umplanungen/-Umbuchungen wird die Bereitstellung der Reisedienste unterbrochen, das statische Reiseinformationsabruf-Steuerungsmodell ganz oder teilweise aktualisiert und ersetzt, und schließlich die Bereitstellung der Reisedienste fortgeführt.

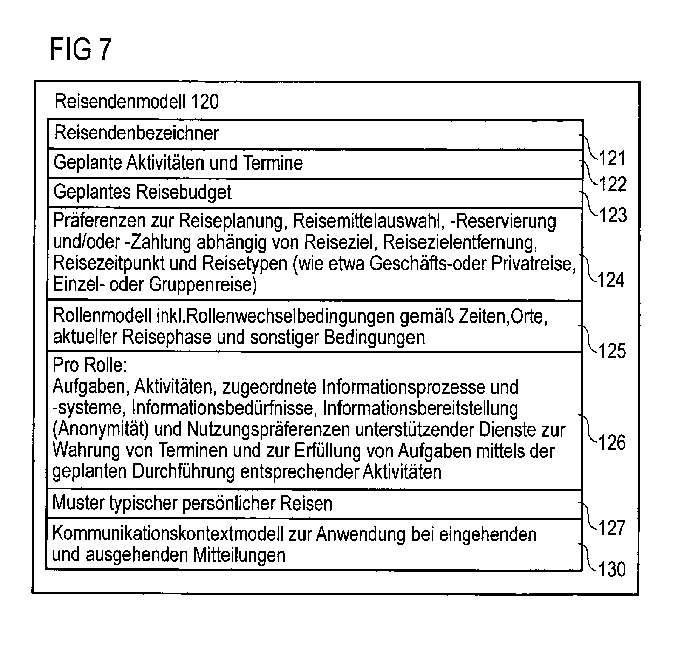

Das Modell des Reisenden beinhaltet:
- Namen, Adressen und Firmenzugehörigkeit des Reisenden (Figur 7, Bezugszeichen 121)
- Angaben zu den während der Reise zur Kommunikation potentiell nutzbaren Kommunikationsnetzen (Netzkontext: 135), inklusive Netzzugangsarten und Kommunikationskostenprofilen, und mobilen Endgeräten (Gerätekontext: 136),
- Angaben zur Steuerung der Erreichbarkeit im Falle typischerweise auftretender Kommunikationskontexte
   - Ein-/Ausschalten der Weiterleitungsfunktion,
   - Konfiguration der Anrufweiterleitung zu bestimmten Kommunikationsendgeräten
   - Parameter (Zieladressen, Nachrichtentyp) und Bedingungen (Zeitpunkt, aktueller Reiseabschnitt) beim Verschicken von Benachrichtigungen an Reisende im Fall von eingehenden Anrufen
- die Rollen und Rollenwechsel des Reisenden (125,126) (Z.Bsp.: anonym, persönlich, Käufer, Geschäftreisenden, Privatreisender, Besprechungsteilnehmer, Hotelgast, Passagier, Fahrzeugführer) und
- geplante Aufgaben, Aktivitäten und Termine (122, 123) und ableitbarer rollen-, orts- und zeitabhängige Reparatur bedürfnisse (126)
- Präferenzen für die Nutzung von Reiseresourcen in Abhängigkeit von Reiseziel, Reisezielentfernung, Reisezeitpunkt und Reisetypen (wie etwa Geschäfts- oder Privatreise, Einzel- oder Gruppenreise) (124)
- Änderungen der Servicebedürfnisse im Modell des Reisenden können eine Neukonstruktion des Reiseinformationsabruf-Steuerungsmodells (150) nach sich ziehen.
- Im Benutzerprofil (300) der PTAIRE stehen Präferenzen (340) für
   - Benutzerspezifische Orte und relative Zeitangaben welche typische Reparaturfunktionen in Relation zu typischen Reisephasen wie z.Bsp.: zu Reisebeginn oder zum Ende der Reise auslösen.
   - Präferenzen für die Nutzung von Reiseresourcen in Abhängigkeit von Reiseziel, Reiseziel-entfernung, Reisezeitpunkt und Reisetypen (wie etwa Geschäfts- oder Privatreise, Einzel- oder Gruppenreise),
   - Muster für typische persönliche Reisen (Sequenzen von Reisephasen) (310, 320, 330)

Teilverfahren zur Steuerung situationsbezogener Reparaturdienste für Reisende:

Die PTAIRE arbeitet während der Bereitstellung des Reiseinformationsabrufdienstes die Reiseinformationsabruf-Steuerungstabelle (150) ab.

Das Verfahren verwendet zusätzlich zur Ortsinformation (113, 183) zeitliche Informationen (112, 182) zur Identifikation der aktuellen Reisephase innerhalb der Sequenz von Reisephasen (110) zur geplanten Durchführung der Reise. Die aktuelle Reisephase (188), deren Verfeinerungen und Attribute, und eine Referenz auf die aktuelle Reisephase als Element der Sequenz der Reisephasen im Reisemodell (100, 188)) wird dabei zusätzlich zum Reiseinformationsabruf-Steuerungsmodell (150) in einer erweiterten Reisestatustabelle (180) abgelegt. Die PTAIRE nimmt dabei an, dass sich der Reisende zu einem bestimmten Zeitpunkt in einer bestimmten auf verschiedenen Detailebenen modellierten Reisephase (110) oder aber in einer entsprechenden von der PTAIRE abgeleiteten Reisezwischenphase befindet. Die bereitgestellten Reparaturfunktionen (150) sind mit der, in der erweiterten Reisestatustabelle ausgewiesenenen, aktuellen Reise(zwischen)phase (188) und den während der Planung vorkonfigurierten Ereignissen (152-155) verknüpft. Das Eintreten von Ereignissen (152-155) löst gegebenenfalls die Ausführung reisephasenspezifischer Reparatursteuerungsaktivitäten (152-155) aus.

Reparatursteuerungsaktivitäten werden im Dienstemodell(160) an Bedingungen gebunden (150, 152-155) und der PTAIRE zur bedingten Ausführung übergeben. Zusätzlich können reisephasengebundene Parameter (117) an Reparaturfunktionen übergeben werden.

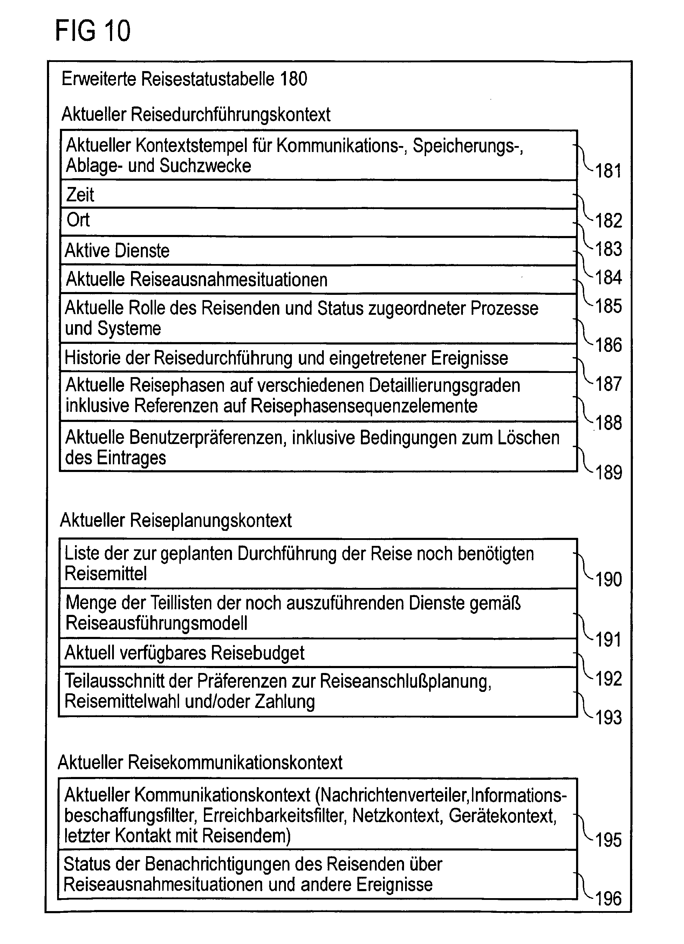

Die Steuerung wirkt sich dabei auf folgende Funktionen der Dienste aus.
- Aktivierung und Deaktivierung von Reparaturfunktionen (152-154). Reparaturfunktionen deren Ausführung und Deaktivierung an das Erreichen bestimmter Reisephasen gebunden sind ermöglichen einen effizienten Einsatz der Rechen- und Speicherkapazitäten der PTAIRE. Dieses Merkmal umfaßt auch die Ausführung in Abhängigkeit von der zeitlich und örtliche relative Nähe zu bestimmten ausgezeichneten Reisephasen. Dies gilt besonders für Pro-aktive Dienste, die unabhängig vom aktuellen Bedarf des Reisenden, im System ausgeführt werden.
- Reisekontextbezogene Parameterisierung der Reparaturfunktionen wird durch zwei PTAIRE-Verfahren unterstützt.
   1. Reparaturfunktionen welche Variablen der erweiterten Reisestatustabelle (180) auslesen, verarbeiten direkt den aktuellen Reisekontext.
   2. Reparaturfunktionen können unter Nutzung der reisephasenspezifischen Modellreferenzen (172, 173, 162), reisephasenspezifische Informationen nutzen und spezifische Vor- und Nachbearbeitung. Der Kern der Reparaturlogik bleibt davon unberührt.
- Informationsspeicherung zu Abrechnungs- und Verifikationszwecken (Logging) als auch die Abspeicherung persönlicher reisebezogener Ruflisten erfolgt unter Verwendung des Reisekontextstempels (Figur 10, Bezugszeichen 181).

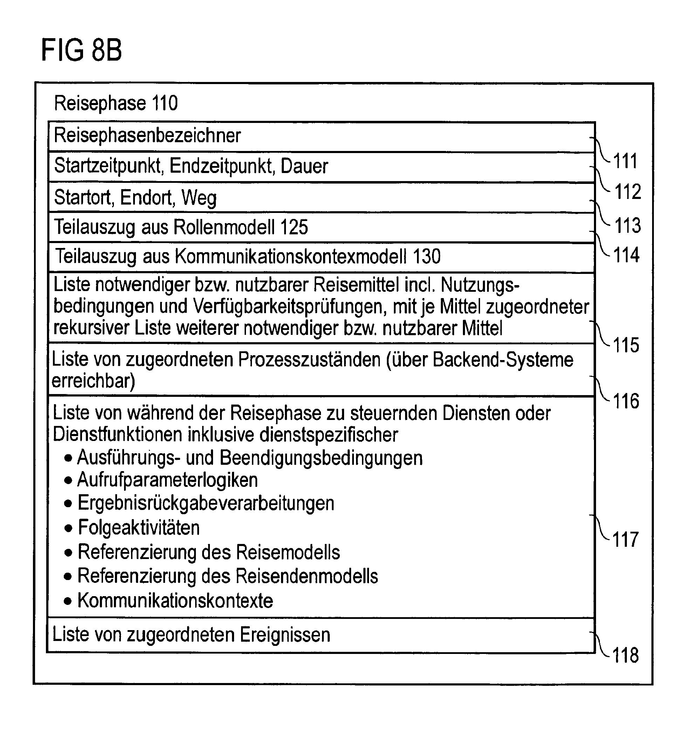

Charakteristika des beispielhaften Reiseinformationsabruf-Steuerungsverfahrens:
- Während der Durchführung der Reise überprüft die PTAIRE durch Vergleiche von Elementen der erweiterten Reisestatustabelle mit den entsprechenden Vorgaben des statischen Reisemodells, ob die Sequenz der Reisephasen wie geplant durchlaufen wird. Hierzu werden laufend Uhrzeit, Ortsinformationen, Prozeßinformationen von Backend-Systemen (185, 186, 187, 188) und Benutzereingaben ausgewertet und als Istwerte mit den zeitlichen, örtlichen, und Prozessparameter Sollwerten der Reisephasen im Reisemodell (Figur 8b, Bezugszeichen 100, 111, 112, 113, 114, 115, 116,117, 118) verglichen.
- Passen ein oder mehrere Istwerte mit den vorgegeben Sollwerten genau einer Reisephase überein, so kann die aktuelle Reisephase während der Durchführung der Reise eindeutig identifiziert werden. Durch die streng geordnete Sequenz der Reisephasen (100) ist dieser Fall typischerweise gegeben. Zur Klärung verbleibender Mehrdeutigkeiten oder Widersprüche, z.Bsp. falls der Reisende anders reist als geplant, kann die PTAIRE die aktuelle Reisephase (188) beim Reisenden erfragen. Gegebenenfalls wird eine PTAIRE-Ausnahmesituation festgestellt und ein Wiederaufsetzen des Systems mit entsprechender Neuanlage der verwendeten Modelle ausgelöst.
- Im Fall von Reiseausnahmesituationen, und damit einhergehenden spontaner Reise-Umplanungen/-Umbuchungen wird die Bereitstellung der Reisedienste unterbrochen, das statische Reiseinformationsabruf-Steuerungsmodell ganz oder teilweise aktualisiert und ersetzt, und schließlich die Bereitstellung der Reisedienste fortgeführt.
- Die PTAIRE verwaltet während der Bereitstellung der persönlichen Reisedienste ein Modell des Reisenden (120). Dieses Modell wird durch Informationen aus dem Benutzerprofil (300) und den aus Personal Information Management Systemen (210) eingelesenen Terminen (Orte und Zeiten), geplanten Aktivitäten und Kontakten (Orte und Namen) initialisiert. Diese konkreten Daten (121, 122, 126) werden rollenspezifisch im Reisendenmodell organisiert. Eine Rolle (110) definiert dabei einen allgemeiner gültigen Informationsbedürfnis-, Aktivitäts- und Kommunikationskontext eines Reisenden. Dynamische Aktualisierungen von Daten des Reisendenmodells, während der Durchführung der Reise, werden in der erweiterten Reisestatustabelle (180) bereitgestellt.
- Die PTAIRE arbeitet pro-aktiv die im Reiseinformationsabruf-Steuerungsmodell aufgelisteten Dienste gemäß der assoziierten Bedingungen ab. Dies erfolgt parallel zur Duchführung der eigentlichen Reise durch den Reisenden.
- Die PTAIRE ermittelt anhand des zeitlichen, räumlichen und Prozess-Fortschritts innerhalb des referenzierten Reisemodells (100) eine für den Reisenden als "aktuell" angenommene Reisephase (182, 183, 188). Auch auf Basis von aktuellen Aufenthalts- und Prozesstatusinformationen des Reisenden (186), welche die PTAIRE während der Reise über angeschlossene Backend-Systeme ermittelt, kann das System die Reisesimulation mit der tatsächlichen Durchführung der Reise abgleichen.
- Der Reisende und der Betreiber können die aktuell durch das System, als für den Reisenden "aktuell" angenommene, Reisephase (188) korrigieren. (Dies ist ähnlich zur Eingabe einer neuen Position durch den Fahrzeugführers zum Wiederaufsetzen eines Fahrzeugnavigationssystems zu sehen.) Der Reisende wird dazu typischerweise aus der Sequenz der geplanten Reisephasen (100) seine aktuelle Reisephase (110) auswählen und der PTAIRE mitteilen.
- Der Reisefortschritt und gegebenenfalls auftretende Abweichungen zwischen der Simulation der geplanten bzw. gebuchten Reise und der tatsächlichen Reise werden aufgrund der Analyse von OnTrip-Informationen während des Fortschritts der tatsächlichen Reise vom Informationssystem erkannt. Dazu wird ab dem Start der Reisedienste (30) der Ist-Ablauf mit dem geplanten Reiseablauf verglichen. Es wird also pro-aktiv vom Rechnersystem die aktuelle Reisephase (188) ermittelt bzw. vorhergesagt.
- Messaging-Dienste von Drittanbietern können durch Nutzung der PTAIRE über eine Programmierschnittstelle den aktuellen Reparaturstatus (189), und den Kommunikationskontext inclusive Kontaktadressen (186), Kommunikationsnetz eigenschafte in Erfahrung bringen. Diese Dienste können durch die Nutzung dieser Schnittstelle reisephasenspezifisch unterstützt werden. Die Bereitstellung dieser Reisestatusinformationen zur Erreichbarkeit (182-188)) an Applikationen und/oder Backend-Systeme kann in Abhängigkeit von der aktuellen Rolle des Reisenden im Bezug zum Anrufendem erfolgen. In welcher Reisephase welche Rolle ausgeübt wird, wird dabei im Reisendenmodell (125) der PTAIRE definiert.
- Damit die PTAIRE performant realisiert werden kann, muß das in der PTAIRE verarbeitete modellierte Reisewissen vor Bereitstellung der reisespezifischen Reparaturdienste in effiziente Laufzeitdatenstrukturen (150) übersetzt werden, welche dann interpretiert werden.
   - Zentrale Datenstrukturen sind dabei die Listen zur zeit-, und ortsgesteuerten Kontrolle der Reparaturfunktionen während der Reise (152-155), inklusive des Reiseinformationsabrufdienstesteuerungsblockes (170). Bei der Aktivierung eines Dienstes wird die im Reiseinformationsabrufdienstesteuerungsblockes enthaltene Referenz (172) auf die Dienstemerkmale der aktuellen Reisephase (188) innerhalb der Liste aller reisephasenspezifischen Leistungsmerkmale des Reparaturdienstemodells (162) gesetzt.
   - Diese wird ergänzt um die Menge der ereignisgesteuerten Reparaturfunktionen während der Reise. Hierzu melden sich Reparaturfunktionen während der Initialisierung des Systems bei Ereignisverwaltungsdiensten an. Dabei werden durch die Interpretation des Reisemodells (100) insbesondere reisephasenbezogene Ereignisse (118) wie etwa das Erreichen einer bestimmten Reisephase (110) unterstützt.
- Falls keine OnTrip-Informationen dem elektronischen Informationssystem zur Verfügung stehen, kann im einfachsten Fall als Istverlauf, der zeitliche Fortschritt der geplanten gebuchten Reise vom elektronischen Informationssystem verwendet werden.
- Typischerweise reicht für eine benutzerfreundliche Steuerung der Reiseinformationsabrufdienste die Modellierung der mit den OnTrip Services verknüpften Reisephasen auf zwei oder drei unterschiedlichen Verfeinerungsgeraden (100) aus.
- Die Abarbeitung einer Reise, modelliert durch Sequenzen von unterschiedlich detaillierten Reisephasen (100) erfolgt dabei quasi parallel in den verschiedenen Detailebenen.
- Wird bei der konkreten Durchführung einer Reise, eine Änderung bei der Durchführung einer geplanten Reisephase notwendig, schlägt die PTAIRE Alternativen zur Durchführung der aktuellen bzw. folgender Reisephasen vor, schlägt Änderungen am Reisemodell (29, 31, 32) vor und erfasst die auftretenden Änderungen.
- Die PTAIRE ermöglicht dem Reisenden das temporäre an die Reisephasendurchführung gebundene Überschreiben und Ablegen persönlicher Reparaturpräferenzen (189) in der erweiterten Reisestatustabelle. Dies führt zu einer Neuberechung des Reiseinformationsabruf-Steuerungsmodells. Nach Ablauf einer Reisephase oder der gesamten Reise gelten wieder die im Benutzerprofil (300) voreingestellten Reparaturpräferenzen.

## Patentansprüche

1. Verfahren zur Versorgung eines Endgerätes (2) eines Reisenden (1) mit Informationen (14, 15) und Diensten (16, 17) zu einer gebuchte Reise (3, 9) des Reisenden (1),
**dadurch gekennzeichnet,**
**dass** aus einem mehrere zeitlich aufeinanderfolgende Reiseabschnitte (3, 9) des Sollverlaufes der Reise umfassenden Modell (13) der Reise während der Reise der aktuell vom Reisenden (1) durchlaufene Reiseabschnitt (3) selektiert (11) wird,
**dass** während des aktuell selektierten Reiseabschnitts (3) relevante Informationen (14, 15, 16) und Dienste aus die Reise betreffenden Informationen und Diensten (14, 15, 16, 17) herausgefiltert (11) werden,
und **dass** seitens des Endgerätes (2) des Reisenden (1) die herausgefilterten (11) Informationen und Dienste (14, 15, 16) zur Auswahl (2, 20) angeboten (2) werden.

2. Verfahren nach Anspruch 1,
**dadurch gekennzeichnet, dass** die Übermittlung (18) von Informationen oder Diensten (14, 15, 16, 17) und/oder Angeboten (19) und/oder einer Auswahl (20) per Mobilfunk (18) an ein Mobilfunkendgerät (2) des Reisenden (1) erfolgt.

3. Verfahren nach einem der vorhergehenden Ansprüche,
**dadurch gekennzeichnet, dass** die Reise (3,9) unterschiedliche Arten von Transportmitteln umfasst, insbesondere ein Flugzeug (9) oder eine Bahn (3) oder eine U-Bahn oder ein Kraftfahrzeug.

4. Verfahren nach einem der vorhergehenden Ansprüche,
**dadurch gekennzeichnet, dass** der Sollverlauf (13) einer Reise (3,9), insbesondere Reiseabschnitte (3, 9) einer Reise und zugehörige Orte und/oder Zeiten und/oder Transportmittel, vor der Reise bestimmt (24, 25) wird.

5. Verfahren nach Anspruch 4,
**dadurch gekennzeichnet, dass** der Sollverlauf einer Reise unter Berücksichtigung zumindest von die Reise betreffenden Buchungsdaten (24) bestimmt wird.

6. Verfahren nach einem der vorhergehenden Ansprüche,
**dadurch gekennzeichnet, dass** die Selektion (11) des aktuellen Reiseabschnittes (3) automatisch aufgrund des Ortes (23) des Reisenden und / oder der aktuellen Zeit sowie des Sollverlaufs (13) der Reise erfolgt.

7. Verfahren nach einem der vorhergehenden Ansprüche,
**dadurch gekennzeichnet, dass** die Selektion des aktuellen Reiseabschnittes einer Reise durch eine vom Reisenden abgefragte Eingabe des aktuellen Reiseabschnittes erfolgt.

8. Verfahren nach einem der vorhergehenden Ansprüche,
**dadurch gekennzeichnet, dass** die Auswahl des aktuellen Reiseabschnittes aus einem Menü von mehreren Reiseabschnitten der Reise erfolgt.

9. Verfahren nach einem der vorhergehenden Ansprüche,
**dadurch gekennzeichnet, dass** dem Reisenden übermittelte Informationen Angaben zum aktuellen Reiseabschnitt oder Transportmittel und/oder zu künftigen Reiseabschnitten oder Transportmitteln der Reise umfassen, insbesondere zu Abfahrts- oder Ankunftszeiten oder Verspätungen oder Umsteige- Hinweisen.

10. Verfahren nach einem der vorhergehenden Ansprüche,
**dadurch gekennzeichnet, dass** Hauptreiseabschnitte einer Reise Unterreiseabschnitte umfassen.

11. Verfahren nach einem der vorhergehenden Ansprüche,
**dadurch gekennzeichnet, dass** Hauptreiseabschnitte jeweils einen mit einem Transportmittel zurückzulegenden Teil der Reise umfassen.

12. Verfahren nach einem der vorhergehenden Ansprüche,
**dadurch gekennzeichnet, dass** Reiseunterabschnitte für die Durchführung eines Reisehauptabschnittes erforderliche Aktivitäten angeben, insbesondere das Wechseln von Transportmitteln oder check -in in Transportmittel.

13. Verfahren nach einem der vorhergehenden Ansprüche,
**dadurch gekennzeichnet, dass** eine Vorauswahl eines Benutzers für eine weitere Filterung der für den aktuellen Reiseabschnitt herausgefilterten Informationen verwendet wird.

14. Verfahren nach einem der vorhergehenden Ansprüche,
**dadurch gekennzeichnet, dass** Dienste Umbuchungen und/ oder Stornierungen von aktuellen oder künftigen Transportmitteln der Reise umfassen.

15. Verfahren nach Anspruch 14,
**dadurch gekennzeichnet, dass** Umbuchungsvorschläge den aktuellen Fortschritt der Reise, insbesondere den vom Reisenden abgefragten oder aufgrund dessen Ortes und/oder Zeit bestimmten Fortschritt der Reise, sowie den Sollverlauf der Reise berücksichtigen.

16. Verfahren nach einem der vorhergehenden Ansprüche,
**dadurch gekennzeichnet, dass** seitens des Endgerätes des Reisenden eine Auswahl vom Reisenden aus den angebotenen Informationen und Diensten erfragt wird und nur die ausgewählten Informationen übertragen und/oder dargestellt bzw. nur die ausgewählten Dienste ausgeführt werden.

17. Vorrichtung, insbesondere zur Durchführung des Verfahrens nach einem der vorhergehenden Verfahrensansprüche,
zur Versorgung eines Endgerätes (2) eines Reisenden (1) mit Informationen (14, 15) und Diensten (16, 17) zu einer gebuchte Reise (3, 9) des Reisenden (1),
**dadurch gekennzeichnet, dass** die Vorrichtung folgendes umfasst:
- eine Einrichtung (10) mit einem Speicher (13) für ein mehrere zeitlich aufeinanderfolgende Reiseabschnitte (3, 9) des Sollverlaufes der Reise umfassendes Modell (14, 15) der Reise,
- eine Einrichtung (12) zum Selektieren eines während der Reise vom Reisenden (1) aktuell durchlaufenen Reiseabschnittes (3),
- eine Einrichtung (11) zum Herausfiltern von während des aktuell selektierten (12) Reiseabschnitts (3) relevanten Informationen (14, 15) und Diensten (16) aus gespeicherten (13), die Reise betreffenden Informationen (14, 15) und Diensten (16, 17),
- eine Einrichtung (10, 18) zum Senden von Daten (19) betreffend seitens des Endgeräts (2) dem Reisenden (1) anzubietende, herausgefilterte (11) Informationen und Dienste (14, 15, 16) an das Endgerät (2).

18. Datenträger mit einem Verfahren nach einem der vorhergehenden Verfahrensansprüche.
